# FASCICULE DE BREVET EUROPEEN

(11) **EP 1 661 965 B1**
(45) Date de publication et mention de la délivrance du brevet: **11.07.2018**
(21) Numéro de dépôt: 05292375.2
(22) Date de dépôt: 08.11.2005
(51) Int. Cl.: C10G 45/36, C10G 45/38, C10G 45/02, C10G 65/06

(54) **Procédé d'hydrotraitement d'une essence oléfinique comprenant une étape d'hydrogénation sélective**
Hydrierverfahren eines olefinischen Benzins mit selektiver Hydrierungsstufe
process for hydrotreating an olefinic gasoline comprising a selective hydrogenation step

(30) Priorité: 26.11.2004 FR 0412592
(43) Date de publication de la demande: 31.05.2006
(73) Titulaire: IFP Energies nouvelles, 92500 Rueil-Malmaison (FR)
(72) Inventeur: Picard, Florent, 69360 Saint Symphorien d'Ozon (FR); Leplat, Sébastien, 69003 Lyon (FR)

(56) Documents cités:
- WO-A-03/102114
- FR-A1- 2 797 639
- US-A- 3 471 400
- US-A- 3 492 220
- US-A- 5 356 851

## Description

### Domaine de l'invention :

La présente invention concerne un procédé d'hydrogénation sélective d'une essence oléfinique contenant des composés polyinsaturés (dioléfines et acétyléniques) sur un catalyseur sulfuré enchaînant avec une étape de transformation sélective des composés soufrés saturés de cette même essence, ou d'une partie de l'essence sélectivement hydrogénée. Le procédé selon l'invention utilise de l'hydrogène comprenant une teneur limitée en CO et/ou CO2, cette teneur limitée pouvant, lorsqu'elle n'est pas nulle, permettre l'utilisation de sources d'hydrogène plus variées et/ou de coût réduit.

Selon l'invention, un procédé d'hydrogénation sélective est un procédé permettant l'hydrogénation substantielle des composés polyinsaturés (d'au moins 70%, de façon préférée d'au moins 80% et de façon très préférée d'au moins 90%), avec un taux d'hydrogénation concommitant des composés mono-insaturés (oléfines) limité (inférieur à 15%, de manière préférée inférieur à 10% et de manière très préférée inférieur à 5%).

### Art antérieur :

Les futures spécifications sur les carburants automobiles prévoient une forte diminution de la teneur en soufre dans ces carburants, et notamment dans les essences. Dans les pays industrialisés, les spécifications à l'heure actuelle sur les teneurs en soufre sont de l'ordre de 150 ppm poids et diminueront dans les années à venir pour atteindre des teneurs inférieures à 10 ppm après une transition à 50 ppm poids. L'évolution des spécifications de teneur en soufre dans les carburants nécessite ainsi la mise au point de nouveaux procédés de désulfuration profonde des essences.
Les sources principales de soufre dans les bases pour essences sont les essences dites de craquage, et principalement, la fraction d'essence issue d'un procédé de craquage catalytique d'un résidu de la distillation atmosphérique ou d'un distillat sous vide d'un pétrole brut. La fraction d'essence issue du craquage catalytique, qui représente en moyenne 40 % des bases essence, contribue en effet pour plus de 90% à l'apport de soufre dans les essences. Par conséquent, la production d'essences peu soufrées nécessite une étape de désulfuration des essences de craquage catalytique. Cette désulfuration est classiquement réalisée par une ou plusieurs étapes de mise en contact des composés soufrés contenus dans lesdites essences avec un gaz riche en hydrogène dans un procédé dit d'hydrodésulfuration. Toutefois, les catalyseurs utilisés au cours des étapes d'hydrodésulfuration sont désactivés par dépôt de polymères. Les précurseurs de ces polymères sont essentiellement les composés polyinsaturés de type diènes conjugués qui polymérisent facilement. Il est donc intéressant de réaliser, avant l'hydrodésulfuration, une hydrogénation sélective des essences permettant de fortement diminuer la teneur en polyinsaturés, sans toutefois hydrogéner fortement les oléfines, ce qui ferait chuter l'indice d'octane.
On cherche donc à produire des fractions hydrocarbonées dont les teneurs en composés polyinsaturés également appelés dioléfines sont généralement inférieures à 1 % poids, et de préférence à 0,5 % poids et de façon très préférée à 0,2 % poids. Pour cela, la principale réaction mise en oeuvre est la réaction d'hydrogénation sélective des dioléfines en oléfines. Outre cette réaction, on observe également des réactions d'isomérisation de la position de la double liaison des oléfines. Ces réactions conduisent à l'augmentation du taux d'oléfines en position interne, ce qui généralement permet d'améliorer l'indice d'octane des oléfines.

Par ailleurs, les essences de craquage catalytique contiennent des composés saturés soufrés qui sont susceptibles de réagir en présence d'hydrogène et d'oléfines pour former des composés soufrés saturés de point d'ébullition augmenté. Ces composés sont concentrés dans les fractions légères de l'essence. En particulier, dans les essences de craquage telles que les essences de FCC (craquage catalytique), les composés soufrés dont le point d'ébullition est inférieur à celui du thiophène sont majoritairement des composés soufrés saturés de type mercaptans ou sulfures, et leur alourdissement permet de diminuer considérablement la teneur en soufre de la fraction légère de l'essence. Parmi ces réactions, les réactions les plus recherchées sont les réactions dites de thioéthérification qui consistent en l'addition des composés mercaptans sur les oléfines. Il a été notamment observé par le demandeur que cette réaction nécessite la présence d'hydrogène.
Le système catalytique ainsi que les conditions opératoires peuvent donc avantageusement être optimisés afin de permettre la transformation des composés soufrés saturés. La transformation par alourdissement de ces composés permet de produire une essence légère appauvrie en soufre, le tout sans hydrogénation des oléfines et donc sans perte d'octane. Afin de tirer entièrement parti de ces réactions de transformation des composés soufrés dans le but de désulfurer les essences oléfiniques, il est avantageux de séparer l'essence ainsi produite en deux fractions : une fraction légère riche en composés oléfiniques et pratiquement dépourvue de composés soufrés, et une fraction lourde qui concentre les composés soufrés et qui est traitée dans une unité de désulfuration. Les réactions mise en oeuvre pour la transformation des composés soufrés sont détaillées dans la demande de brevet FR 2 797 639.

Les réactions d'hydrogénation des polyinsaturés et d'alourdissement des mercaptans ainsi que les procédés mis en oeuvre sont décrits en détail dans la demande de brevet US 02/0153280. Le procédé réalisant ces réactions utilise nécessairement de l'hydrogène.

Les procédés d'hydrogénation sélective et d'hydrodésulfuration peuvent utiliser de l'hydrogène provenant de plusieurs sources. La source principale d'hydrogène dans la raffinerie est le reformage catalytique. L'unité de reformage catalytique produit de l'hydrogène lors de réactions de déshydrogénation de naphtènes en aromatiques et de déshydrocyclisation. Cet hydrogène présente un taux de pureté généralement compris entre 60% et 90% mais il est sensiblement exempt de CO et CO₂.
Selon les besoins de la raffinerie, l'hydrogène peut également être produit par vaporéformage d'hydrocarbures légers ou par oxydation partielle de divers hydrocarbures, notamment de résidus lourds. Le vaporéformage consiste à transformer une charge légère d'hydrocarbures en gaz de synthèse (mélange H₂, CO, CO₂, CH₄, H₂O) par réaction avec de la vapeur d'eau sur un catalyseur à base de nickel. La production d'hydrogène par oxydation partielle consiste à traiter une fraction hydrocarbure par oxydation par l'oxygène à haute température pour produire un gaz de synthèse constitué principalement de CO, CO₂, H₂ et H₂O. Dans ces deux derniers cas la production d'hydrogène s'accompagne d'une production d'oxydes de carbone qui sont généralement sensiblement éliminés par conversion à la vapeur du CO en CO2, puis élimination du CO2 par absorption, par exemple par une solution d'amines. Il peut y avoir une élimination finale du CO résiduel par méthanation. Toutefois, les teneurs résiduelles en oxydes de carbone (CO et CO2) peuvent dans certains cas être supérieures à 1000 ppmv voire plus. D'autres sources d'hydrogène sont aussi parfois utilisées, comme de l'hydrogène issu des gaz de craquage catalytique, qui contient des quantités notables de CO et de CO2. Enfin, du CO et du CO2 peuvent être apportés dans certains cas par la charge d'hydrocarbures elle-même, sous forme de gaz dissous, si la charge a été en contact avec des traces de ces gaz en amont. L'hydrogène de raffinerie, et l'hydrogène au niveau de la zone réactionnelle des différents hydrotraitements peut donc contenir des quantités variables de CO et de CO2.

La demande de brevet US 2003/0221994 décrit l'impact du CO et du CO₂ sur les réactions d'hydrodésulfuration des coupes essences issues d'unité de craquage catalytique. Les résultats présentés dans ce brevet montrent que la présence des oxydes de carbone dans l'hydrogène même à des teneurs très faibles, inférieures à 100 ppmv engendre une diminution significative de l'activité hydrodésulfurante des catalyseurs sulfures. Toutefois, dans la gamme de teneurs en CO testée, cette inhibition est sélective des réactions d'hydrodésulfuration, et les réactions d'hydrogénation sont peu affectées. Ainsi, d'après les données fournies par ce document, l'activité hydrogénante des catalyseurs sulfures n'est pas significativement affectée par la présence d'oxydes de carbone dans l'hydrogène.
Toutefois, et de façon surprenante, il a été trouvé par le demandeur que la présence d'oxydes de carbone dégrade significativement l'activité des catalyseurs mis en oeuvre dans les procédés d'hydrogénation sélective sur des catalyseurs sulfurés.

### Description sommaire de l'invention :

L'invention concerne un procédé d'hydrotraitement d'une charge d'essence oléfinique pour au moins la réduction de sa teneur en composés dioléfiniques et acétyléniques selon la revendication 1. La teneur en CO + CO2 est comprise entre 5 et 200 ppmv. La teneur en CO est comprise entre 1 et 20 ppmv. La teneur en CO₂, souvent supérieure à celle en CO est souvent supérieure à 10 ppmv ou à 20 ppmv.

Ces conditions permettent d'obtenir une efficacité catalytique élevée, et d'utiliser des sources d'hydrogène variées. Elles n'imposent pas que l'hydrogène soit produit exclusivement par réformage catalytique et/ou purifié totalement par tamis moléculaire.

### Description détaillée de l'invention :

On a trouvé en effet que les oxydes de carbone ont une action inhibitrice sur l'hydrogénation sélective dans le cas d'éléments actifs du catalyseur sous forme de sulfures, notamment dans le cas de sulfures de nickel et ou de cobalt, en particulier avec présence de sulfure de molybdène ou sulfure de tungstène (ou d'un sulfure d'un autre élément du groupe VI B de la classification périodique des éléments). Ceci n'est pas connu de l'art antérieur.

Typiquement, le catalyseur d'hydrogénation sélective comprend au moins un sulfure de nickel ou de cobalt, et est sensiblement exempt d'éléments du groupe VIII de la classification périodique des éléments autres que le fer, le nickel ou le cobalt. De préférence, il contient également un sulfure de molybdène. Une composition très préférée du catalyseur comprend au moins un sulfure de nickel ou de cobalt (notamment de Ni) avec une teneur en Ni ou Co en équivalent oxyde NiO ou CoO comprise entre 1 et 30 % poids, comprend également au moins un sulfure de molybdène avec une teneur en Mo en équivalent oxyde MoO3 comprise entre 1 et 30 % poids et est sensiblement exempt d'éléments du groupe VIII de la classification périodique des éléments autres que le fer, le nickel ou le cobalt.

Ces teneurs sont classiquement évaluées, par convention, en équivalent oxyde, c'est à dire en évaluant le poids qu'aurait l'oxyde correspondant. Ce calcul est conventionnel dans la mesure ou l'élément est typiquement présent sous forme sulfurée et non plus oxyde.

On a trouvé également que le CO était, sur les catalyseurs sous forme sulfure, plus inhibiteur de l'hydrogénation sélective que le CO2. Pour cette raison la teneur en CO est comprise entre 1 et 20 ppmv.

Typiquement, l'hydrogène est utilisé en simple passe au niveau de ladite étape a1) ou c). Ceci permet de ne pas enrichir la teneur en CO et/ou CO2 par effet de boucle de recyclage.

Généralement, le procédé selon l'invention comprend l'étape a1) et une étape subséquente b) d'hydrodésulfuration sélective, réalisée sur une partie au moins de la charge après traitement dans l'étape a1). Cette étape b) tire parti de l'élimination des composés très insaturés dans a1). Le catalyseur et les conditions opératoires utilisés à l'étape a1) sont déterminés pour réaliser simultanément une transformation au moins partielle de produits soufrés compris dans la charge par augmentation de leur poids moléculaire, tel que décrit dans le brevet FR 2 797 639.

Optionnellement, le procédé peut comprendre une étape a2) subséquente à l'étape a1) et antérieure à l'étape b) pour réaliser une transformation au moins partielle de produits soufrés par augmentation de leur poids moléculaire.

On a également trouvé que les réactions d' augmentation du poids moléculaire de produits soufrés, notamment de mercaptans légers sont aussi inhibées par la présence de quantités notables de CO et/ou CO2 dans l'hydrogène utilisé, notamment pour les catalyseurs de type sulfure précités. Toutefois, il semble que la mesure de l'inhibition puisse être différente de celle de l'hydrogénation sélective. Pour cette étape a2), on pourra utiliser de l'hydrogène ayant l'une quelconque des limitations précitées (teneur maximum ou fourchette de teneur en ppmv) en CO et/ou CO2. Notamment: teneur en CO inférieure à 400 ppmv, de préférence inférieure à 200 ppmv, ou même à 80 ppmv, et de façon très préférée inférieure à 40 ppmv; teneur en CO souvent comprise entre 1 et 400 ppmv, ou entre 5 et 400 ppmv, de préférence comprise entre 1 et 200 ppmv, ou entre 5 et 200 ppmv, ou même comprise entre 1 et 80 ppmv, ou entre 5 et 80 ppmv, et de façon très préférée comprise entre 1 et 40 ppmv, ou entre 5 et 40 ppmv. Elle peut même être comprise entre 1 et 20 ppmv, ou entre 5 et 20 ppmv.

Les catalyseurs et conditions décrits dans le brevet FR 2 797 639 sont utilisables pour les étapes a1), a2), ainsi que pour l'hydrodésulfuration sélective b), notamment de la fraction lourde, en une ou plusieurs étapes. Le procédé comprend une étape b) d'hydrodésulfuration sélective, et subséquemment, sur une partie au moins de l'effluent de cette étape, ladite étape c) d'hydrogénation sélective. Il peut alors y avoir une étape d'hydrogénation sélective subséquente à l'étape b) d'hydrodésulfuration sélective, ou bien 2 étapes d'hydrogénation sélective la première a1) préliminaire, la seconde c) subséquente à l'étape b) d'hydrodésulfuration sélective. Le procédé selon l'invention comprend:
- une étape a1) d'hydrogénation sélective et de transformation au moins partielle de produits soufrés par augmentation de leur poids moléculaire sur un catalyseur à base d'alumine comprenant au moins un sulfure de nickel ou de cobalt (la teneur en Ni ou en Co par rapport au catalyseur étant comprise entre 1 et 30%, de manière préférée entre 1 et 20% et de manière très préférée entre 2 et 15% poids en équivalent oxyde de type NiO et/ou CoO), comprenant optionnellement mais de façon préférée du molybdène sous forme sulfurée (teneur en Mo comprise entre 1 et 30% ; de manière préférée entre 5 et 30% ; et de manière très préférée entre 5 et 25% poids en équivalent oxyde de type MoO3) et sensiblement exempt d'éléments du groupe VIII de la classification périodique des éléments autres que le fer, le nickel ou le cobalt, dans des conditions de pression comprise entre 0,5 et 4 MPa, de température comprise entre 100 et 250 °C, de vitesse spatiale comprise entre 1 et 10 h⁻¹, et subséquemment,
- une étape de fractionnement pour produire au moins une fraction légère et une fraction lourde,
- une étape b) d'hydrodésulfuration sélective d'au moins ladite fraction lourde dans des conditions de pression comprise entre 0,5 et 4 MPa, de température comprise entre 200 et 400°C, de vitesse spatiale comprise entre 1 et 10 h⁻¹, dans lequel l'hydrogène d'appoint utilisé au niveau de cette étape a une teneur en CO inférieure à 100 ppmv et une teneur en CO2 inférieure à 400 ppmv.

Toute méthode connue permettant de diminuer la teneur en oxydes de carbone peut être utilisée pour produire un hydrogène répondant aux spécifications précitées selon la présente invention.

### Purification de l'hydrogène:

Parmi les méthodes les plus couramment utilisées pour éliminer les oxydes de carbone (CO, CO2) dans l'hydrogène, nous pouvons citer le « PSA, ou pressure swing adsorption », ce qui signifie « adsorption par variation de pression », ou le « TSA, ou thermal swing adsorption », ce qui signifie « adsorption par variation thermique ». Ces deux procédés consistent à adsorber les oxydes de carbone sur un tamis moléculaire pour produire un hydrogène appauvri en carbone, puis à désorber les oxydes de carbone par variation de pression ou de température. La méthanation est également une méthode qui peut être utilisée dans le cadre de l'invention. Ce procédé consiste à traiter le mélange de l'hydrogène et des oxydes de carbone sur un catalyseur hydrogénant tel que le nickel sur alumine afin de transformer les oxydes de carbone en CH₄ et H₂O. Une autre solution consiste à oxyder le monoxyde de carbone en dioxyde de carbone, soit par réaction avec l'eau selon le procédé appelé « water gas shift » (conversion à la vapeur), soit par oxydation sélective du CO en CO₂ par l'oxygène. Cette dernière réaction est notamment décrite dans la demande de brevet WO 01/0181242. Après oxydation du CO en CO2, le CO2 formé peut être éliminé au cours d'une étape de lavage à l'aide d'une solution de méthyldiéthanolamine. Citons également la possibilité de séparer les oxydes de carbone de l'hydrogène par l'utilisation de membranes perméables à l'hydrogène et non perméables aux oxydes de carbone.

La solution mise en oeuvre pour traiter et purifier l'hydrogène peut donc être choisie dans la liste ci-dessus non limitative, mais également consister en une combinaison de différentes solutions.

### Charges utilisables:

Les fractions hydrocarbonées qui font l'objet de l'invention sont de préférence des coupes dont le point final de distillation est inférieur à 300°C et de préférence inférieur à 250°C. L'invention s'applique plus particulièrement aux essences (ce terme désignant des fractions hydrocarbonées insaturées bouillant essentiellement entre 30 et 230°C, en distillation ASTM) contenant au moins 5% poids d'oléfines, 40 ppm poids de soufre et/ou 0,5% poids de dioléfines. Ces essences sont généralement issues d'unités de craquage catalytique ou thermique, telles par exemple que le FCC, la cokéfaction, le vapocraqueur.

### Préparation du catalyseur (étapes a1 et optionnellement a2):

La composition la plus préférée utilise du nickel et du molybdène.

Ces métaux sont déposés sous forme d'oxydes sur un support inerte poreux , tel que par exemple de l'alumine, de la silice ou un support contenant au moins 50% poids d'alumine. De façon préférée, on utilisera un catalyseur contenant du nickel et du molybdène tels que la teneur en oxyde de nickel NiO soit comprise entre 1% poids et 20% poids, et la teneur en oxyde de molybdène MoO₃ soit comprise entre 5 % poids et 25 % poids.

Le catalyseur doit être mis en oeuvre sous forme sulfurée, c'est à dire que les oxydes métalliques sont transformés en sulfures. La sulfuration du catalyseur est effectuée par toutes méthodes connues de l'homme du métier. Habituellement la sulfuration s'effectue par un traitement en température du catalyseur au contact d'un composé organique soufré décomposable et générateur d'H₂S ou directement au contact d'un flux d'H₂S dilué dans de l'hydrogène. Cette étape de sulfuration peut être réalisée in-situ ou ex-situ (en dedans ou en dehors du réacteur) à des températures comprises entre 100 et 500°C et plus préférentiellement à des températures comprises entre 200 et 400°C.

### Conditions opératoires préférées(étapes a1 et optionnellement a2):

Le catalyseur est de préférence mis en oeuvre en lit fixe. La pression d'opération est comprise entre 0,4 et 5 MPa et de préférence entre 0,5 et 4 MPa, typiquement supérieure à 1 MPa. La vitesse spatiale horaire (qui correspond au volume de charge liquide par volume de catalyseur) est comprise entre environ 1 h⁻¹ et 20 h⁻¹, de préférence entre 1 h⁻¹ et 10 h⁻¹ et de façon très préférée entre 1,5 h⁻¹ et 10 h⁻¹. Le débit d'hydrogène est ajusté de sorte que le rapport molaire entre l'hydrogène est les dioléfines soit supérieur à 1,1 et de préférence supérieur à 1,5. L'excès d'hydrogène est favorable à l'hydrogénation des dioléfines, toutefois, si l'hydrogène est introduit en trop grand excès, il pourra réagir avec les oléfines pour former des paraffines et donc induire une perte d'octane de l'essence. Par conséquent, le rapport molaire entre l'hydrogène et les dioléfines doit de préférence être inférieur à 5 et de façon très préférée inférieur à 3. La température est comprise entre 50°C et 250°C, de préférence entre 100°C et 250°C et de façon très préférée entre 80°C et 200°C. La température peut être ajustée afin de d'obtenir le taux de conversion des dioléfines recherché.

## Revendications

1. Procédé d'hydrotraitement d'une charge d'essence oléfinique pour au moins la réduction de sa teneur en composés dioléfiniques et acétyléniques et sa désulfuration sélective, comprenant :
- une étape a1) d'hydrogénation sélective et de transformation au moins partielle de produits soufrés par augmentation de leur poids moléculaire sur un catalyseur à base d'alumine comprenant au moins un sulfure de nickel ou de cobalt avec une teneur en Ni ou Co en équivalent oxyde comprise entre 1 et 30 % poids et au moins un sulfure de molybdène avec une teneur en molybdène en équivalent oxyde comprise entre 1 et 30 % poids, et sensiblement exempt d'éléments du groupe VIII de la classification périodique des éléments autres que le fer, le nickel ou le cobalt, dans des conditions de pression comprise entre 0,5 et 4 MPa, de température comprise entre 100 et 250 °C, de vitesse spatiale comprise entre 1 et 10 h⁻¹, dans lequel l'hydrogène d'appoint utilisé au niveau de cette étape a une teneur en CO + CO2 comprise entre 5 et 200 ppmv, une teneur en CO comprise entre 1 et 20 ppmv et dans lequel le rapport molaire H2/dioléfines est inférieur à 5,
et subséquemment
- une étape de fractionnement pour produire au moins une fraction légère et une fraction lourde,
- une étape b) d'hydrodésulfuration sélective d'au moins ladite fraction lourde dans des conditions de pression comprise entre 0,5 et 4 MPa, de température comprise entre 200 et 400 °C, de vitesse spatiale comprise entre 1 et 10 h⁻¹, dans lequel l'hydrogène d'appoint utilisé au niveau de cette étape a une teneur en CO inférieure à 100 ppmv et une teneur en CO2 inférieure à 400 ppmv.

2. Procédé selon la revendication 1, dans lequel l'hydrogène est utilisé en simple passe au niveau de ladite étape a1).

## Patentansprüche

1. Verfahren zur Hydrobehandlung einer olefinischen Benzincharge zur Reduktion mindestens seines Gehalts an diolefinischen und acetylenischen Verbindungen und zu dessen selektiver Entschwefelung, umfassend:
- eine Stufe a1) zur selektiven Hydrierung und zur mindestens teilweisen Umwandlung von schwefelhaltigen Produkten durch Erhöhung ihres Molekulargewichts auf einem Katalysator auf Basis von Aluminiumoxid, der mindestens ein Nickel- oder Cobaltsulfid umfasst, mit einem Ni- oder Co-Gehalt in Oxidäquivalenten im Bereich zwischen 1 und 30 Gew.-%, und mindestens einem Molybdänsulfid mit einem Molybdängehalt in Oxidäquivalenten im Bereich zwischen 1 und 30 Gew.-%, und im Wesentlichen frei von Elementen der Gruppe VIII des Periodensystems der Elemente, die nicht Eisen, Nickel oder Cobalt sind, unter Druckbedingungen im Bereich zwischen 0,5 und 4 MPa, Temperaturbedingungen im Bereich zwischen 100 und 250 °C, einer Raumgeschwindigkeit im Bereich zwischen 1 und 10 h⁻¹, wobei der in dieser Stufe verwendete Nachspeise-Wasserstoff einen Gehalt an CO + CO2 im Bereich zwischen 5 und 200 ppmv, einen Gehalt an CO im Bereich zwischen 1 und 20 ppmv aufweist und wobei das Molverhältnis H2/Diolefine kleiner 5 ist, und anschließend
- eine Stufe zur Fraktionierung, um mindestens eine leichte Fraktion und eine schwere Fraktion herzustellen,
- eine Stufe b) zur selektiven Hydrodesulfurierung mindestens der schweren Fraktion unter Druckbedingungen im Bereich zwischen 0,5 und 4 MPa, Temperaturbedingungen im Bereich zwischen 200 und 400 °C, einer Raumgeschwindigkeit im Bereich zwischen 1 und 10 h⁻¹, wobei der in dieser Stufe verwendete Nachspeise-Wasserstoff einen Gehalt an CO kleiner 100 ppmv und einen Gehalt an CO2 kleiner 400 ppmv aufweist.

2. Verfahren nach Anspruch 1, wobei der Wasserstoff in der Stufe a1) in einem einzigen Durchgang verwendet wird.

## Claims

1. Process for the hydrotreatment of an olefinic gasoline feedstock for at least the reduction of its diolefinic and acetylenic compounds content and its selective desulphurization, comprising
a stage a1) of selective hydrogenation and at least partial conversion of sulphur products by increasing their molecular weight on an alumina-based catalyst comprising at least a nickel or cobalt sulphide with a Co content in oxide equivalent comprised between 1 and 30%, and at least one molybdenum sulphide with an Mo content in oxide equivalent comprised between 1 and 30% by weight, and substantially free of elements of Group VIII of the periodic table of the elements other than iron, nickel or cobalt, under pressure conditions comprised between 0.5 and 4 MPa, temperature conditions comprised between 100 and 250ºC, space velocity comprised between 1 and 10 h⁻¹, wherein the makeup hydrogen used in this stage has a CO + CO₂ content comprised between 5 and 200 ppmv and a CO content comprised between 1 and 20 ppm, wherein the H2/olefins moral ratio is below 5
and subsequently,
- a fractionation stage for producing at least one light fraction and one heavy fraction,
- a stage b) of selective hydrodesulphurization of at least said heavy fraction under pressure conditions comprised between 0.5 and 4 MPa, temperature conditions comprised between 200 and 400ºC, space velocity comprised between 1 and 10 h⁻¹, wherein the makeup hydrogen used in this stage has a CO content of less than 100 ppmv and a CO2 content of less than 400 ppmv.

2. Process according to claim 1, wherein the hydrogen is used in a single pass in said stage a1).
